# EUROPÄISCHE PATENTSCHRIFT

(11) **EP 1 815 490 B1**
(45) Veröffentlichungstag und Bekanntmachung des Hinweises auf die Patenterteilung: **16.04.2008**
(21) Anmeldenummer: 05807579.7
(22) Anmeldetag: 15.11.2005
(51) Int. Cl.: H01H 71/40

(54) **SCHALTGERÄT MIT EINEM THERMISCHEN UND ELEKTROMAGNETISCHEN AUSLÖSER**
SWITCHING EQUIPMENT COMPRISING A THERMAL AND ELECTROMAGNETIC TRIP DEVICE
APPAREIL DE COMMUTATION COMPRENANT UN DECLENCHEUR THERMIQUE ET ELECTROMAGNETIQUE

(30) Priorität: 22.11.2004 DE 102004056278
(43) Veröffentlichungstag der Anmeldung: 08.08.2007
(73) Patentinhaber: ABB AG, 68309 Mannheim (DE)
(72) Erfinder: CLAEYS, Patrick, 64287 Darmstadt (DE); VOGEL, Albrecht, 76297 Stutensee (DE)
(86) Internationale Anmeldenummer: PCT/EP2005/012189
(87) Internationale Veröffentlichungsnummer: WO 2006/056336

(56) Entgegenhaltungen:
- DE-A1- 4 413 888
- DE-U1- 9 405 745

## Beschreibung

Die Erfindung betrifft ein Schaltgerät mit einem Gehäuse und mit wenigstens einer ein festes Kontaktstück und ein bewegliches Kontaktstück umfassenden Kontaktstelle, und mit einem thermischen und magnetischen Auslöser mit einer Auslösespule und einem die Kontaktstelle öffnenden Auslöseanker, gemäß dem Oberbegriff des Anspruchs 1. Ein solches Schaltgerät, wobei ein Teil des Auslöseankers aus einem Material mit thermischem Formgedächtniseffekt gebildet ist, ist in der DE 94 05 745 U1 offenbart. Weiter betrifft die Erfindung die Verwendung eines Materials mit einem magnetischen Formgedächtniseffekt in einem eine Auslösespule und einen Auslöseanker aufweisenden thermisch-elektromagnetischen Auslöser für ein Schaltgerät gemäß dem Oberbegriff des Anspruchs 13, sowie weiterhin die Verwendung eines Materials mit einem magnetischen Formgedächtniseffekt zur Überstrom- und Kurzschlussstromauslösung in einem eine Kontaktstelle und einen thermisch-elektromagnetischen Auslöser umfassenden Schaltgerät gemäß dem Oberbegriff des Anspruchs 16.

Bei gattungsgemäßen Schaltgeräten, beispielsweise Leitungsschutzschaltern oder Motorschutzschaltern, dient der elektromagnetische Auslöser zur Unterbrechung des Strompfades zwischen den Ein- und Ausgangsklemmen im Falle des Auftretens eines Kurzschlussstromes. Der thermische Auslöser dient zur Unterbrechung des Strompfades für den Fall, dass ein Überstrom auftritt, der den Nennstrom um einen bestimmten Betrag und über eine bestimmte Zeit hinweg überschreitet. Die im Stand der Technik heute bekannten elektromagnetischen Auslöser, wie beispielsweise in der DE 101 26 852 C1 oder der DE 100 10 093 A1 beschrieben, arbeiten dabei alle nach dem Prinzip, dass ein Auslöseanker bei Auftreten eines Kurzschlussstromes auf einen Magnetkern hin in Bewegung versetzt wird, und im Verlauf dieser Bewegung schlägt der Auslöseanker über einen mit ihm in Wirkverbindung stehenden Stößel das bewegliche Kontaktstück von dem festen Kontaktstück an der Kontaktstelle weg, so dass dadurch die Kontaktstelle geöffnet wird. Bekannte elektromagnetische Auslöser umfassen dazu eine Spule, die üblicherweise aus schraubenförmig gewickeltem Draht hergestellt ist, sowie einen mit einem die Spule außen umgebenden Joch fest verbundenen Magnetkern, der ins Innere der Spule eingreift. Der Auslöseanker ist entweder als Klappanker oder als Tauchanker ausgebildet, wobei sich letzterer ebenfalls innerhalb der Spule befindet. Der Anker wird vom Kern im Ruhezustand mittels einer Druckfeder auf Abstand gehalten. Wenn der Kurzschlussstrom durch die Auslösespule fließt, so bewirkt das dabei erzeugte Magnetfeld der Auslösespule, dass der Auslöseanker entgegen der rückstellenden Kraft der Druckfeder auf den Kern hin bewegt wird. Nach Abschalten des Kurzschlussstromes wird der Anker durch die rückstellende Kraft der Druckfeder wieder in seine Ausgangslage zurückbewegt.

Im Stand der Technik bekannte thermische Auslöser arbeiten in der Regel mit Auslöseelementen aus Thermobimetall oder thermischen Formgedächtnismetallen, die beispielsweise als Biegebalken oder als Schnappscheibe realisiert sind. Aus der DE 43 00 909 A1 ist ein thermischer Auslöser mit einem Thermobimetall-Biegebalken bekannt.

Thermische und magnetische Auslöser werden heute aus einem ersten, thermischen Teil-Auslöser mit einem thermischen Auslöseanker aus Thermobimetall oder thermischem Formgedächtnismetall, wie oben erwähnt, und einem zweiten, magnetischen Teil-Auslöser mit einer Auslösespule und einem magnetischen Auslöseanker zusammengesetzt. Aus der DE 42 42 516 A1 ist ein thermisch-magnetischer Kombi-Auslöser bekannt, bei dem der thermische Teil-Auslöser als Schnappscheibe und der elektromagnetische Teil-Auslöser durch einen Schlaganker-Auslöser ausgebildet ist. Aber auch hier sind zwei getrennte Auslöser aufgebaut, die räumlich nahe beieinander in einer komplexen Baugruppe kombiniert sind.

Der Aufbau thermischer und elektromagnetischer Auslöser ist daher heute sehr aufwändig und mit hohen Kosten verbunden, da zwei komplette Auslöser aufgebaut und miteinander kombiniert werden müssen, wobei in viele Einzelteile mit engen Toleranzen gefertigt und zusammen zu bauen sind.

Es ist daher die Aufgabe der vorliegenden Erfindung, ein gattungsgemäßes Schaltgerät einfacher montierbar und damit kostengünstiger aufzubauen.

Die Aufgabe wird gelöst durch ein Schaltgerät mit den kennzeichnenden Merkmalen des Anspruchs 1, durch die Verwendung eines Materials mit einem kombinierten thermischen und magnetischen Formgedächtniseffekt in einem Schaltgerät gemäß den kennzeichnenden Merkmalen des Anspruchs 13 und durch die Verwendung eines Materials mit einem kombinierten thermischen und magnetischen Formgedächtniseffekt zur Kurzschluss- und Überstromstromauslösung in einem Schaltgerät gemäß den kennzeichnenden Merkmalen des Anspruchs 16.

Erfindungsgemäß also umfasst der Auslöseanker zwei in Wirkverbindung stehende Teil-Auslöseanker, und ein erster Teil-Auslöseanker ist aus einem ersten Material mit einem magnetischen Formgedächtniseffekt gebildet, und ein zweiter Teil-Auslöseanker ist aus einem Thermobimetall oder aus einem Material mit thermischem Formgedächtniseffekt oder aus einem Material mit kombiniertem thermischen und magnetischem Formgedächtniseffekt gebildet ist, wobei sowohl unter Einfluss des Magnetfeldes der Auslösespule im Kurzschlussstromfall, als auch unter Einfluss einer durch Überstrom hervorgerufenen Temperaturerhöhung der Auslöseanker verformt und dadurch die Öffnung der Kontaktstelle bewirkt wird.

Bei magnetischen Formgedächtnislegierungen kann in der martensitischen Phase eine Formänderung durch den Übergang zwischen zwei Kristallstrukturvarianten einer Zwilings-Kristallstruktur hervorgerufen werden, wobei der Übergang zwischen den Kristallstrukturvarianten durch ein äußeres Magnetfeld gesteuert wird. Diese Materialien werden daher als magnetische Formgedächtnislegierungen oder "Magnetic Shape Memory Alloys" (MSM) bezeichnet.

Bei den bekannten thermischen Formgedächtnislegierungen, hier auch als "Thermal Shape Memory Alloys (TSM) bezeichnet, z.B. auf Basis Ni-Ti, sind die beiden Formen, zwischen denen das Bauteil wechselt, in unterschiedlichen Phasen des Materials ausgeformt: einer martensitischen Phase unterhalb und einer austenitischen Phase oberhalb einer sog. Transitionstemperatur des Materials. Überschreitet die Materialtemperatur die Transitionstemperatur, so findet der Phasenübergang statt, mit dem die Formänderung einhergeht

Insofern unterscheiden sich die thermischen Formgedächtnislegierungen in ihrer Funktionsweise von den ebenfalls bekannten Thermobimetallen. Ein Thermobimetall-Blech besteht nämlich aus zwei zusammengeschweißten Metallenblechen unterschiedlicher thermischer Ausdehnungskoeffizienten. Bei Erwärmung dehnt sich die eine Seite des Thermobimetalls stärker aus als die andere, so dass sich das Thermobimetall-Blech insgesamt in Richtung auf das Material mit dem kleineren Wärmeausdehnungskoeffizienten hin verbiegt.

Magnetische Formgedächtnislegierungen werden vorteilhafterweise als ferromagnetische Formgedächtnislegierungen aus Nickel, Mangan und Gallium gebildet. Genauere Erläuterungen zum Aufbau und der Funktionsweise von ferromagnetischen Formgedächtnislegierungen auf der Basis von Nickel, Mangan und Gallium sind beispielsweise der WO 98/08261 und der WO 99/45631 entnehmbar.

Durch die entsprechende Legierungszusammensetzung kann bestimmt werden, bei welcher Orientierung des äußeren Magnetfeldes die maximale Ausdehnung erreicht wird; z.B. kann das Magnetfeld senkrecht oder quer zu dem MSM - Material stehen, um die maximale Ausdehnung zu erreichen.

Formänderungen, die mit MSM-Materialien unter Einwirken eines äußeren Magnetfeldes erreicht werden, können lineare Ausdehnung, Verbiegung oder Verdrehung (Torsion) sein.

Bei MSM-Materialien findet ergänzend zu dem magnetisch stimulierten auch noch ein thermisch stimulierter Übergang zwischen der martensitischen und der austenitischen Phase statt.

Wenn das äußere Magnetfeld hinreichend klein ist, so verhalten sich diese Materialien wie ein herkömmliches thermisches Formgedächtnismetall. Dabei kann durch die entsprechende Legierungszusammensetzung die thermische Transitionstemperatur bestimmt und somit für die jeweilige Anwendung angepasst werden.

Bei MSM - Materialien kann somit unterhalb der Transitionstemperatur, in der Niedertemperatur- oder martensitischen Phase, eine der o.g. Formänderungen ausschließlich durch Anlegen eines äußeren Magnetfeldes hervorgerufen werden. Ohne äußeres Magnetfeld, oder bei sehr geringem äußerem Magnetfeld, erfolgt die Formänderung thermisch induziert bei Über- oder Unterschreiten der Transitionstemperatur.

Der Vorteil der Erfindung liegt darin, dass bei einem erfindungsgemäßen Schaltgerät beide Auslöseprinzipien, nämlich das thermische und das elektromagnetische, in einem einzigen Auslöseelement niedriger Komplexität realisiert sind. Damit wird der Aufbau eines thermischen und magnetischen Auslösers stark vereinfacht. Der erfindungsgemäße thermische und magnetische Auslöser lässt sich auch wesentlich kompakter und platzsparender realisieren als eine Kombination von zwei getrennten thermischen und magnetischen Auslösern gemäß dem Stand der Technik. Somit ist auch ein erfindungsgemäßes Schaltgerät mit einem erfindungsgemäßen thermischen und magnetischen Auslöser einfacher und kompakter aufbaubar.

Ein weiterer Vorteil eines erfindungsgemäßen Schaltgerätes ist die Schnelligkeit der magnetischen Auslösung. Es muß keine träge Masse beschleunigt werden, die Formänderung aufgrund des magnetischen Formgedächtniseffektes geschieht nahezu verzögerungsfrei.

Vorteilhaft ist auch die Erreichbarkeit einer hohen Stellkraft bei relativ großer Längenänderung aufgrund der hohen magnetisch-mechanischen Energiewandlungseffizienz bei ferromagnetischen Formgedächtnislegierungen.

Bei dem erfindungsgemäßen Schaltgerät kann das Magnetfeld für die elektromagnetische Auslösung durch eine stromdurchflossene Spule erzeugt werden.

In einer vorteilhaften Ausführungsform der Erfindung sind der erste und zweiteTeil-Auslöseanker aus ferromagnetischen Formgedächtnislegierungen aus Nickel, Mangan und Gallium mit jeweils unterschiedlichen Zusammensetzungen gebildet.

Der erste, magnetische und der zweite, thermische Teil-Auslöseanker können vorteilhafterweise als längserstreckte Bauteile ausgebildet sein, wobei unter dem Einfluss des Magnetfeldes der Auslösespule im Kurzschlussstromfall der erste Teil-Auslöseanker und unter Einfluss einer durch Überstrom hervorgerufenen Temperaturerhöhung der zweite Teil-Auslöseanker in Richtung ihrer Längsachse gedehnt werden. Der erste Teil-Auslöseanker ist beispielsweise mit dem zweiten Teil-Auslöseanker formschlüssig verbunden, so dass insgesamt ein zweiteiliger Auslöseanker gebildet wird, dessen einer Teil aus dem thermischen und dessen anderer Teil aus dem magnetischen Formgedächtnismaterial besteht. Auch andere Arten einer Wirkverbindung zwischen dem magnetischen und dem thermischen Anker sind denkbar. Wichtig ist, dass der zweite, thermische und der erste, magnetische Teil-Anker beide unabhängig voneinander ihre Form ändern können, so dass der Auslöseanker insgesamt sowohl magnetisch als auch thermisch aktiviert auf die Kontaktstelle des Installationsschaltgerätes einwirken kann.

Der erste und zweite Teil-Auslöseanker können auch balkenförmig ausgebildet sein, wobei unter dem Einfluss des Magnetfeldes der Auslösespule im Kurzschlussstromfall der erste Teil-Auslöseanker und unter Einfluss einer durch Überstrom hervorgerufenen Temperaturerhöhung der zweite Teil-Auslöseanker verbogen werden. Der Erste Teil-Auslöseanker kann dabei aus einem Streifen einer ferromagnetischen Formgedächtnislegierung bestehen, an dessen Breitseite formschlüssig ein Thermobimetall-Streifen angebracht ist.

Eine weitere vorteilhafte mögliche Ausgestaltungsform ist so aufgebaut, dass der erste und zweite Teil-Auslöseanker spiralförmig ausgebildet sind, wobei unter dem Einfluss des Magnetfeldes der Auslösespule im Kurzschlussstromfall der erste Teil-Auslöseanker und unter Einfluss einer durch Überstrom hervorgerufenen Temperaturerhöhung der zweite Teil-Auslöseanker in Richtung der Spiralenlängsachse gedehnt werden.

Der Auslöseanker kann dabei an seinem zweiten Ende in Wirkverbindung mit einem Stößel stehen. Auch ist die Lagerung des erfindungsgemäßen Auslöseankers aus ferromagnetischem Formgedächtnismetall einfacher als die Lagerung des Auslöseankers bei herkömmlichen Auslösern. Denn dort muss der Auslöseanker leicht beweglich gelagert sein, wohingegen er bei erfindungsgemäßen Auslösern keine beweglichen Teile mehr umfasst und in einer vorteilhaften Ausführungsform an einem ersten Ende fest gelagert ist, wobei er sich an seinem zweiten, beweglichen Ende unter Einwirkung sowohl des Magnetfeldes als auch einer überstrombedingten Temperaturerhöhung ausdehnt oder verbiegt Vorteilhaft ist dabei insbesondere eine Ausführungsform, bei der der Auslöseanker an einem ersten, festen Ende in einem mit dem Gehäuse verbundenem Lager gehalten ist.

In einer vorteilhaften Ausführungsform des erfindungsgemäßen thermischen und magnetischen Auslösers wird die Temperaturerhöhung des Auslöseankers, insbesondere des zweiten, thermischen Teil-Auslöseankers, im Überstromfall mittels indirekter Erwärmung bewirkt. Der Überstrom durchfließt dazu beispielsweise die Auslösespule, in deren Nahbereich der Auslöseanker angebracht ist. Bei Erwärmung der Spule infolge Überstrom wird der Auslöseanker, insbesondere der zweite, thermische Teil-Auslöseanker, durch Wärmestrahlung indirekt mit erwärmt.

Eine weitere vorteilhafte Ausführungsform ist dadurch gekennzeichnet, dass die Temperaturerhöhung des Auslöseankers, insbesondere des zweiten, thermischen Teil-Auslöseankers, im Überstromfall durch direkte Erwärmung bewirkt wird. Der Auslöseanker wird dabei direkt vom Überstrom durchflossen, und durch aufgrund der durch den Stromfluss induzierten Widerstandserwärmung heizt sich der Auslöseanker, insbesondere der zweite, thermische Teil-Auslöseanker, auf.

Ein großer Vorteil eines efindnungsgemäßen Schaltgerätes liegt darin, dass die räumliche Zuordnung der Auslösespule zu dem Auslöseanker aus ferromagnetischem Formgedächtnismetall vielfältig an die Geometrieerfordernisse innerhalb des Schaltgerätegehäuses anpassbar ist. So kann in einer vorteilhaften Ausführungsform der Auslöseanker von der Auslösespule umfasst sein. Gemäß einer weiteren vorteilhaften Ausführungsform kann der Auslöseanker außerhalb der Spule in deren Nahbereich angebracht sein.

Ein zusätzliches weiteres thermisches Auslöseelement ist nicht nötig.

Somit ist eine optimale Raumausnutzung innerhalb des Schaltgerätegehäuses erreichbar, was zu kleineren und damit kostengünstigeren Bauformen der Schaltgeräte führt.

Es werden weniger Teile mit geringerer Anforderung an deren Maßgenauigkeit für den thermischen und elektromagnetischen Auslöser benötig, und die Montage eines thermischen und elektromagnetischen Auslösers mit einem Auslöseanker aus ferromagnetischem Formgedächtnismetall ist daher einfacher und billiger.

Weitere vorteilhafte Ausgestaltungen und Verbesserungen der Erfindung und weitere Vorteile sind den weiteren Unteransprüchen zu entnehmen.

Anhand der Zeichnungen, in denen fünf Ausführungsbeispiele der Erfindung dargestellt sind, sollen die Erfindung sowie weitere vorteilhafte Ausgestaltungen der Erfindung näher erläutert und beschrieben werden.

Es zeigen:
- **Fig. 1**: in schematischer Darstellung eine erste Ausführungsform eines erfindungsgemäßen Schaltgerätes mit einem stabförmigen Auslöseanker, gebildet aus einem ersten, magnetischen Teil-Auslöseanker aus ferromagnetischem Formgedächtnismetall und einem zweiten, thermischen TeilAuslöseanker aus thermischem Formgedächtnismetall, angeordnet im Innenraum einer Auslösespule, im Ruhezustand,
- **Fig. 2**: in schematischer Darstellung die erste Ausführungsform nach Fig. 1 im ausgelösten Zustand,
- **Fig. 3**: in schematischer Darstellung eine zweite Ausführungsform eines erfindungsgemäßen Schaltgerätes mit einem stabförmigen Auslöseanker, gebildet aus einem ersten, magnetischen Teil-Auslöseanker aus ferromagnetischem Formgedächtnismetall und einem zweiten, thermischen Teil-Auslöseanker aus thermischem Formgedächtnismetall, angeordnet neben einer Auslösespule, im Ruhezustand,
- **Fig. 4**: in schematischer Darstellung die zweite Ausführungsform nach Fig. 3 im ausgelösten Zustand,
- **Fig. 5**: in schematischer Darstellung eine dritte Ausführungsform eines erfindungsgemäßen Schaltgerätes mit einem als einseitig eingespannter Biegebalken ausgebildeten Auslöseanker, gebildet aus einem ersten, magnetischen Teil-Auslöseanker aus einem Streifen magnetischen Formgedächtnismetalles, und einem zweiten, thermischen Teil-Auslöseanker, aus einem Streifen Thermobimetall, angeordnet im Innern einer Auslösespule, im Ruhezustand,
- **Fig. 6**: in schematischer Darstellung die dritte Ausführungsform nach Fig. 5 im ausgelösten Zustand,
- **Fig. 7**: in schematischer Darstellung eine vierte Ausführungsform eines erfindungsgemäßen Schaltgerätes mit einem spiralförmigen Auslöseanker, gebildet aus einem ersten, magnetischen Teil-Auslöseanker aus einer Spirale aus magnetischem Formgedächtnismetall, und einem zweiten, thermischen Teil-Auslöseanker aus einer Spirale aus Thermobimetall, angeordnet im Innern einer Auslösespule, im Ruhezustand,
- **Fig. 8**: in schematischer Darstellung die vierte Ausführungsform nach Fig. 7 im ausgelösten Zustand, sowie
- **Fig. 9**: in schematischer Darstellung eine fünfte Ausführungsform eines erfindungsgemäßen Schaltgerätes mit einem stromdurchflossenen stabförmigen Auslöseanker, gebildet aus einem ersten, magnetischen TeilAuslöseanker aus ferromagnetischem Formgedächtnismetall und einem zweiten, thermischen Teil-Auslöseanker aus thermischem Formgedächtnismetall , angeordnet im Innern einer Auslösespule, im Ruhezustand, sowie
- **Fig. 10**: in schematischer Darstellung die fünfte Ausführungsform nach Fig. 9 im ausgelösten Zustand.

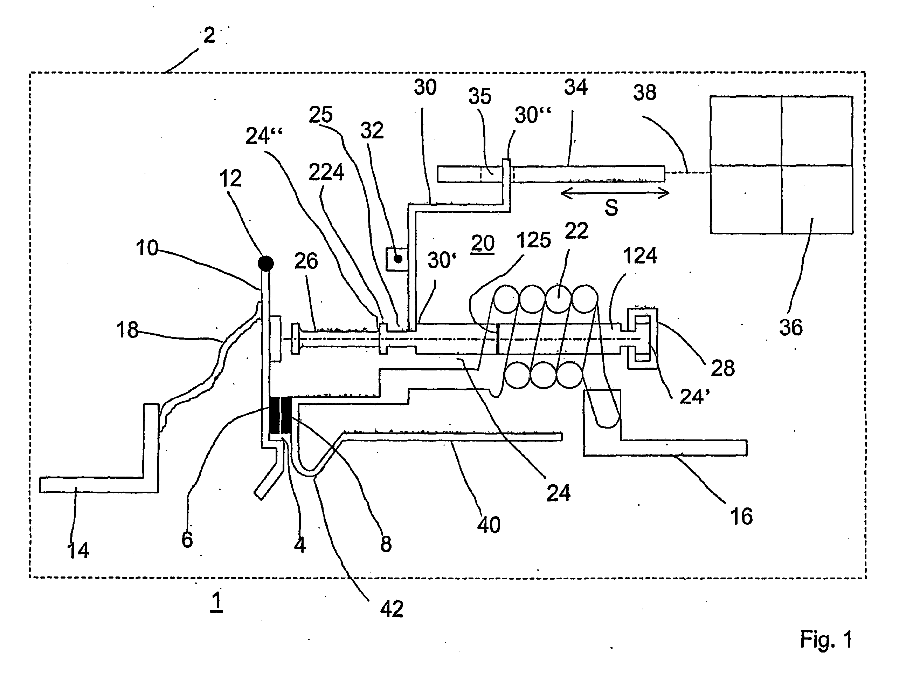

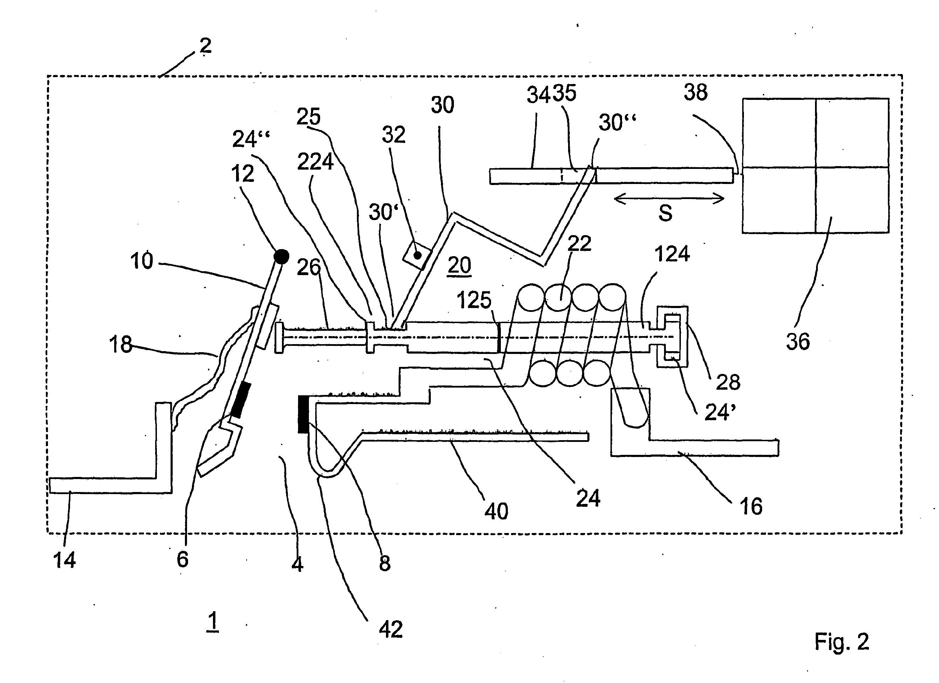

In Fig. 1 ist schematisch ein Schaltgerät 1 mit einem Gehäuse 2, einem thermischen und elektromagnetischen Auslöser 20 und einem Schaltwerk 36 im nicht ausgelösten Zustand gezeigt. In Fig. 2 ist das Schaltgerät nach Fig. 1 im ausgelösten Zustand gezeigt, wobei gleiche oder ähnlich wirkende Baugruppen oder Teile mit denselben Bezugsziffern bezeichnet sind.

Zwischen einem Eingangsklemmstück 14 und einem Ausgangsklemmstück 16 verläuft ein Strompfad über eine bewegliche Litze 18, einen in einem Kontakthebellager 12 gelagerten Kontakthebel 10, eine, ein an dem Kontakthebel 10 befindliches, bewegliches Kontaktstück 6 und ein festes Kontaktstück 8 umfassende Kontaktstelle 4, und eine Auslösespule 22. In der in Fig. 1 gezeigten Schaltstellung ist die Kontaktstelle 4 geschlossen. Mit der Auslösespule 22 und dem festen Kontaktstück 8 ist über ein ohrenförmiges Zwischenstück 42 noch ein Joch 40 verbunden.

Der thermische und elektromagnetische Auslöser 20 umfasst die Auslösespule 22 und einen Auslöseanker 24, der hier balkenförmig ausgeführt und im Inneren der Auslösespule 22 so angeordnet ist, dass die Spulenlängsachse und die Auslöseanker-Längsachse zusammenfallen.

Der Auslöseanker 24 ist aus einem ersten, magnetischen Teil-Auslöseanker 124 und einem zweiten, thermischen Teil-Auslöseanker 224 gebildet, die an einer Verbindungsstelle 125 miteinander verbunden sind. Die Art der Verbindung kann form- kraft- oder stoffschlüssig sein.

An einem ersten, festen Ende 24' ist der erste, magnetische Teil-Auslöseanker 124 in einem mit dem Gehäuse 2 verbundenen Auslöseanker-Lager 28 gehalten. An seinem zweiten, freien Ende 24" steht der zweite, thermische Teil-Auslöseanker 224 in Wirkverbindung mit einem Stößel 26. Die Wirkverbindung ist hier als formschlüssige Verbindung gezeigt, alternativ könnten jedoch auch kraft- oder stoffschlüssige Verbindungen realisiert werden.

An seinem freien Ende 24" weist der zweite, thermische Teil-Auslöseanker 224 eine Einkerbung 25 auf, in die ein in einem Auslösehebel-Lager 32 gelagerter Auslösehebel 30, beispielsweise mit einer an seinem ersten freien Ende 30' befindlichen Gabel eingreift. Das zweite freie Ende 30" des Auslösehebels 30 greift in eine Ausnehmung 35 in einem Schieber 34 ein, der über eine Wirklinie 38 in Wirkverbindung mit dem Schaltwerk 36 steht.

Der erste, magnetische Teil-Auslöseanker 124 besteht aus einer ferromagnetischen Formgedächtnislegierung mit einem magnetischen Formgedächtniseffekt auf Basis von Nickel, Mangan und Gallium. Solche ferromagnetischen Formgedächtnislegierungen sind prinzipiell bekannt und verfügbar, sie werden beispielsweise von der finnischen Firma AdaptaMat Ltd. hergestellt und vertrieben. Eine typische Zusammensetzung von ferromagnetischen Formgedächtnis-Legierungen für den erfindungsgemäßen Einsatz in Schaltgeräten ist gegeben durch die Strukturformel Ni_{65-x-y}Mn ₂₀₊ₓGa_{15+y}, wobei x zwischen 3 Atomprozent und 15 Atomprozent liegt und y zwischen 3 Atomprozent und 12 Atomprozent.

Die hier verwendete ferromagnetische Formgedächtnislegierung hat die Eigenschaft, dass in ihrer martensitischen Phase, das ist diejenige Phase, die das Material unterhalb der thermischen Transitionstemperatur einnimmt, unter Einwirkung eines äußeren Magnetfeldes im mikroskopischen Maßstab ein Übergang zwischen zwei Kristallstrukturvarianten einer Zwillings-Kristallstruktur stattfindet, der makroskopisch mit einer Formänderung verbunden ist. Bei der hier gewählten Ausführung des Auslöseankers besteht die Formänderung in einer linearen Dehnung in Richtung der Balkenlängsachse.

Der zweite, thermische Teil-Auslöseanker 224 besteht hier beispielsweise aus einer im Prinzip bekannten thermischen Formgedächtnislegierung aus Nickel-Titan. Bei einem solchen Material geht bekanntermaßen bei Überschreiten der thermischen Transitionstemperatur das thermische Formgedächtnismaterial - auch ohne äußeres Magnetfeld -von seiner martensitischen in seine austenitische Phase über. Dieser Phasenübergang ist reversibel und mit einer Formänderung verbunden, welche sich hier ebenfalls als eine Längenänderung des balkenförmigen zweiten, thermischen Teil-Auslöseankers 224 manifestiert.

Der zweite, thermische Teil-Auslöseanker 224 kann aber auch aus einer ferromagnetischen Formgedächtnislegierung aus Nickel, Mangan, Gallium gebildet sein, die sich in ihrer Zusammensetzung von derjenigen im ersten, magnetischen Teil-Auslöseanker verwendeten durch ihre thermische Transitionstemperatur unterscheidet Die thermische Transitionstemperatur bei den hier verwendeten ferromagnetischen Formgedächtnislegierungen liegt im Bereich der Raumtemperatur und ist durch Variation der Atomprozent-Anteile x und y innerhalb einer Bandbreite einstellbar. Damit ist der Arbeitstemperaturbereich, innerhalb dessen der thermische und magnetische Auslöser als rein magnetischer Auslöser arbeitet, innerhalb einer Bandbreite durch Wahl der Materialzusammensetzung einstellbar.

Bei Überschreiten der thermischen Transitionstemperatur geht das ferromagnetische Formgedächtnismaterial - auch ohne äußeres Magnetfeld - in seine austenitische Phase über und verhält sich insofern ähnlich wie ein herkömmliches thermisches Formgedächtnismetall auf Basis von Nickel und Titan. Die ferromagnetische Formgedächtnislegierung des ersten, magnetischen Teil-Auslöseankers 124 ist demnach so zusammengesetzt, dass eine effektive magnetische Wechselwirkung gewährleistet ist, wohingegen die ferromagnetische Formgedächtnislegierung des zweiten, thermischen Teil-Auslöseankers 224 so gewählt ist, dass die thermische Transitionstemperatur im gewünschten Bereich liegt, ohne Rücksicht auf die Effizienz der magnetischen Wechselwirkung.

Die Kurzschlussstromauslösung geschieht nun folgendermaßen. Fließt durch das Schaltgerät 2 im Kurzschlussfall ein hoher Kurzschlussstrom, so dehnt sich der erste, magnetische Teil-Auslöseanker 124 aufgrund des oben beschriebenen magnetischen Formgedächtniseffektes aus. Der zweite, thermische Teil-Auslöseanker 224 ändert seine Länge nicht, wird aber von dem sich ausdehnenden ersten, magnetischen Teil-Auslöseanker 124 mitgenommen, und infolgedessen schlägt der Stößel 26 das bewegliche Kontaktstück 6 vom festen Kontaktstück 8 weg, so dass die Kontaktstelle 4 geöffnet und das Schaltgerät ausgelöst wird, wie in Fig. 2 dargestellt. Die Ausdehnung des ferromagnetischen Formgedächtnismaterials geschieht dabei sehr schnell und nahezu verzögerungsfrei. Die Verzögerungszeit als die Zeitdifferenz zwischen dem Auftreten des Kurzschlussstromes und der maximalen Längenausdehnung des Auslöseankers 24 liegt typischerweise in der Größenordnung von einer Millisekunde.

Die Auslösung wird hier durch den Auslösehebel 30 unterstützt, der bei Ausdehnung des Auslöseankers 24 sich im Uhrzeigersinn um das Auslösehebel-Lager 32 dreht und dabei den Schieber 34 in dessen Längserstreckungsrichtung, angedeutet durch den Richtungspfeil S, verschiebt, so dass der Schieber 34 über die Wirklinie 38 das Schaltwerk 36 betätigt, das die Kontaktstelle über hier nicht dargestellte Wirkverbindungen dauerhaft geöffnet hält.

Nach der Auslösung des Schaltgerätes ist der Strompfad unterbrochen und das Magnetfeld der Auslösespule 22 bricht wieder zusammen. Infolgedessen wird sich der erste, magnetische Teil-Auslöseanker 124 wieder auf seine Ausgangsmaße zusammenziehen und dabei den zweiten, thermischen Teil-Auslöseanker mitnehmen, wodurch auch der Auslösehebel 30 wieder in die Ausgangsstellung, wie in Fig. 1 gezeigt, zurückbewegt wird. Die Kontaktstelle 4 wird jetzt aufgrund der hier nicht dargestellten Wirkverbindungen durch das Schaltwerk 36 dauerhaft in Offenstellung gehalten.

Die thermische Überstromauslösung geschieht folgendermaßen: Überschreitet der im Strompfad durch das Schaltgerät 1 fließende Strom seinen Nennwert um einen höheren Wert und für einen längeren Zeitraum als zugelassen, so erwärmt sich der zweite, thermische Teil-Auslöseanker 224 aufgrund der Wärmeeinstrahlung von der Auslösespule 22 auf eine Temperatur, die oberhalb der thermischen Transitionstemperatur des thermischen Formgedächtnismetalls liegt. Infolgedessen findet die thermisch induzierte Formänderung des zweiten, thermischen Teil-Auslöseankers 224 statt, die sich hier ebenfalls als eine Längenausdehnung manifestiert. Der erste, magnetische Teil-Auslöseanker 124 ändert seine Länge nicht, da das Magnetfeld im Überstromfall dazu nicht ausreicht. Durch die Ausdehnung des zweiten, thermischen Teil-Auslöseankers 224 und infolge des Eingriffs dessen ersten freien Endes 30' dreht sich der Auslösehebel 30 im Uhrzeigersinn um das Auslösehebel-Lager 32 und verschiebt dabei den Schieber 34 in dessen Längserstreckungsrichtung, angedeutet durch den Richtungspfeil S, so dass der Schieber 34 über die Wirklinie 38 das Schaltwerk 36 betätigt, das die Kontaktstelle über hier nicht dargestellte Wirkverbindungen öffnet und dauerhaft geöffnet hält.

Die elektromagnetische und die thermische Auslösung werden also von einem einzigen Funktionsbauelement bewirkt, das aus zwei funktionell unterschiedlichen, zusammenwirkenden Zonen gebildet ist. Der Aufbau eines Schaltgerätes mit einem thermischen und magnetischen Auslöser wie beschrieben wird damit sehr einfach und aufgrund des Entfallens einer kompletten Baugruppe kostengünstiger als bei herkömmlichen Schaltgeräten.

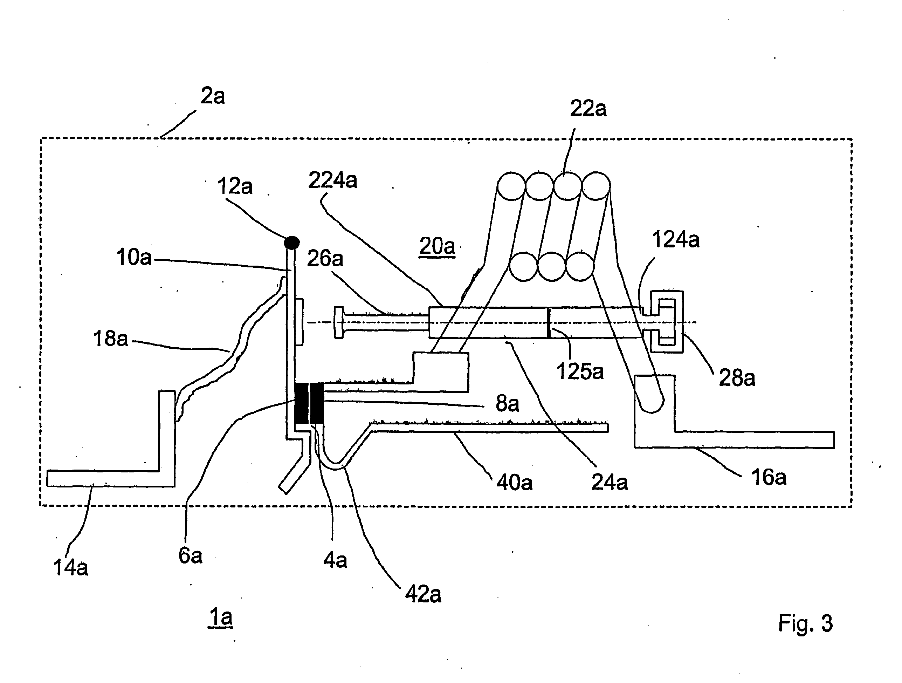

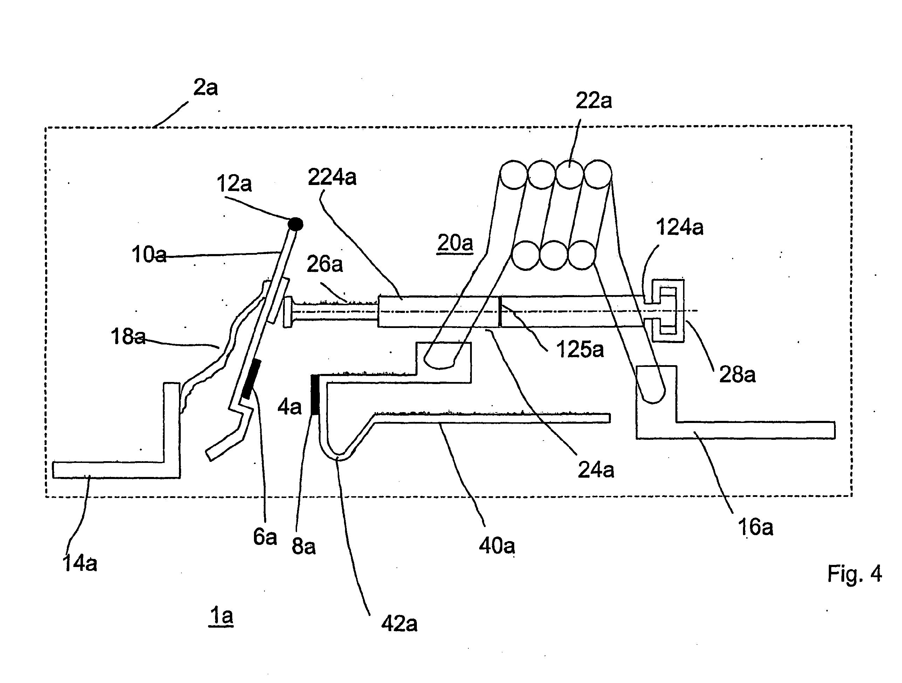

In Fig. 3 ist eine weitere Ausführungsform eines erfindungsgemäßen Schaltgerätes 1a in nicht ausgelöstem Zustand, und in Fig. 4 das Schaltgerät 1a in ausgelöstem Zustand gezeigt. Gleiche oder gleichwirkende Baugruppen und Teile sind mit denselben Bezugsziffern wie in den Fig. 1 und 2, ergänzt um den Buchstaben a, bezeichnet. Der wesentliche Unterschied zwischen dem Schaltgerät 1a gemäß Fig. 3 und 4 und dem Schaltgerät 1 gemäß Fig. 1 und 2 besteht darin, dass bei ersterem der Auslöseanker 24a mit dem ersten, magnetischen Teil-Auslöseanker 124a und dem zweiten, thermischen Teil-Auslöseanker 224a außerhalb der Auslösespule 22a angeordnet ist. Außerdem sind der Auslösehebel 30a, der Schieber 34a und das Schaltwerk 36a in den Fig. 3 und 4 der Übersichtlichkeit halber nicht dargestellt. Im Kurzschlussstromfall wird die

Formänderung des ersten, magnetischen Teil-Auslöseankers 124a bei der in den Fig. 3 und 4 gezeigten Ausführungsform durch das Magnetfeld im Außenbereich der Auslösespule 22a bewirkt. Eine entsprechende Auslegung der Auslösespule 22a und des Magnetkreises kann von einem Fachmann unter Zuhilfenahme seines normalen Fachwissens und unterstützt durch systematische Versuche vorgenommen werden. Im thermischen Überlastfall erfolgt die Erwärmung des zweiten, thermischen Teil-Auslöseankers 224 ebenfalls durch Wärmestrahlung von der Auslösespule 22.

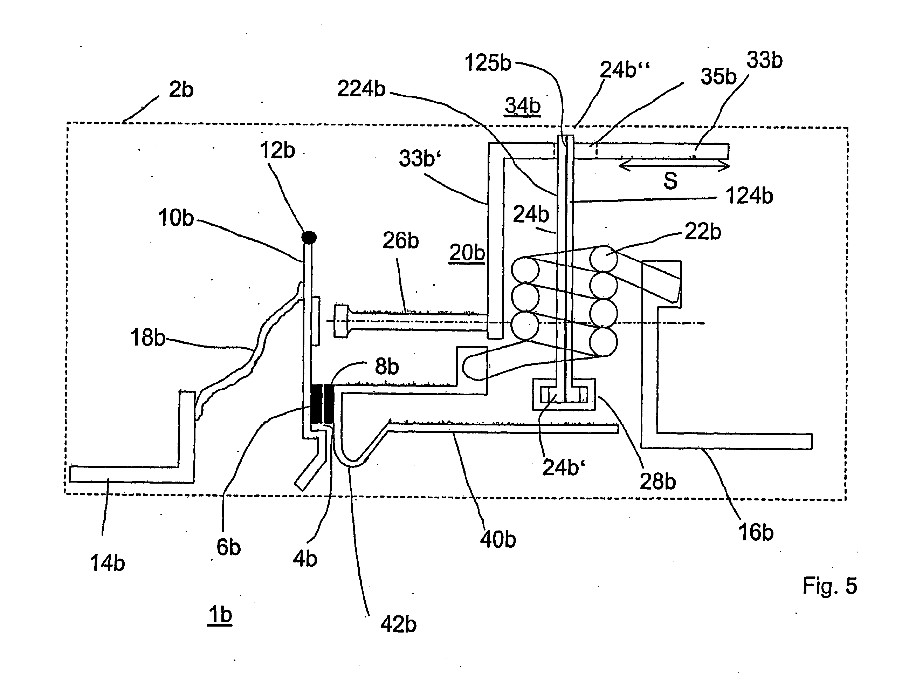

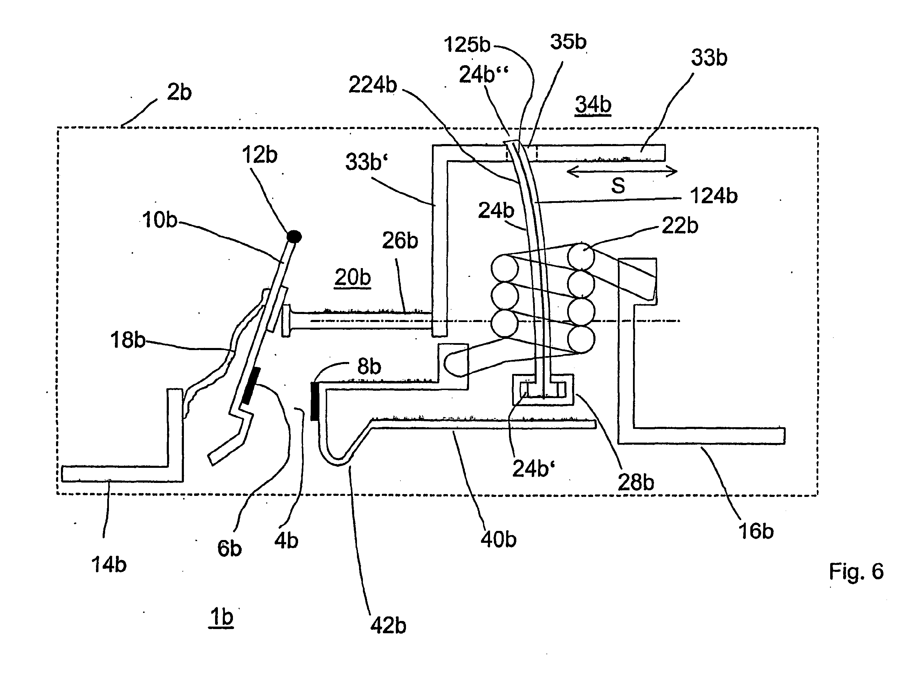

In Fig. 5 ist eine weitere Ausführungsform eines erfindungsgemäßen Schaltgerätes 1b in nicht ausgelöstem Zustand und in Fig. 6 das Schaltgerät 1 b in ausgelöstem Zustand gezeigt. Gleiche oder gleichwirkende Baugruppen und Teile sind mit denselben Bezugsziffern wie beim Schaltgerät 1 in den Fig. 1 und 2, ergänzt um den Buchstaben b, bezeichnet. Der wesentliche Unterschied zwischen dem Schaltgerät 1 b gemäß Fig. 5 und 6 und dem Schaltgerät 1 gemäß Fig. 1 und 2 besteht darin, dass der Auslöseanker 24b mit dem ersten, magnetischen Teil-Auslöseanker 124b und dem zweiten, thermischen Teil-Auslöseanker 224b bei ersterem als Biegebalken ausgeführt ist. Der erste, magnetische Teil-Auslöseanker 124b ist als Blechstreifen aus einer ferromagnetischen Formgedächtnislegierung gebildet. Der zweite, thermische Teil-Auslöseanker 224b ist als Blechstreifen aus einer thermischen Formgedächtnislegierung oder aus einem - an sich bekannten - Thermobimetall gebildet. Die beiden Blechstreifen des ersten, magnetischen Teil-Auslöseankers 124b und des zweiten, thermischen Teil-Auslöseankers 224b sind an einer Breitseite miteinanderform-, kraft- oder stoffschlüssig verbunden, so dass eine Verbiegung deines der beiden Teil-Auslöseanker den Auslöseanker 24b insgesamt verbiegt. Mit einem ersten, festen Ende 24b' ist der Auslöseanker 24b einseitig an der Auslöseanker-Lagerstelle 28b fest eingespannt, so dass er insgesamt als Biegebalken wirkt. Der Auslöseanker 24b ist im Innenraum der Auslösespule 22b angeordnet. Die durch das Magnetfeld der Auslösespule 22b im Kurzschlussfall induzierte Formänderung besteht hier in einer Verbiegung des ersten, magnetischen Teil-Auslöseankers 124b, und die durch Temperaturerhöhung aufgrund von Wärmestrahlung von der Auslösespule 22b induzierte Formänderung besteht hier in einer Verbiegung des zweiten, thermischen Teil-Auslöseankers 224b,jeweils an dem zweiten, freien Ende 24b", siehe Fig. 6. Das zweite, freie Ende 24b" des Auslöseankers 24b greift in eine Ausnehmung 35b in einem ersten Schenkel 33b des L-förmigen Schiebers 34b ein, wodurch dieser bei Verbiegen des Auslöseankers 24b in Richtung der Längserstreckungsrichtung des ersten Schenkels 33b, angedeutet durch den Richtungspfeil S, verschoben wird. An seinem zweiten Schenkel 33b' steht der Schieber 34b in Wirkverbindung mit dem Stößel 26b, der bei Verschieben des Schiebers 34b den beweglichen Kontakt 6b von dem festen Kontakt 8b wegschlägt und damit die Kontaktstelle 4b öffnet. Das Schaltwerk 36 ist in der Ausführungsform der Fig. 5 und 6 der Übersichtlichkeit halber nicht dargestellt.

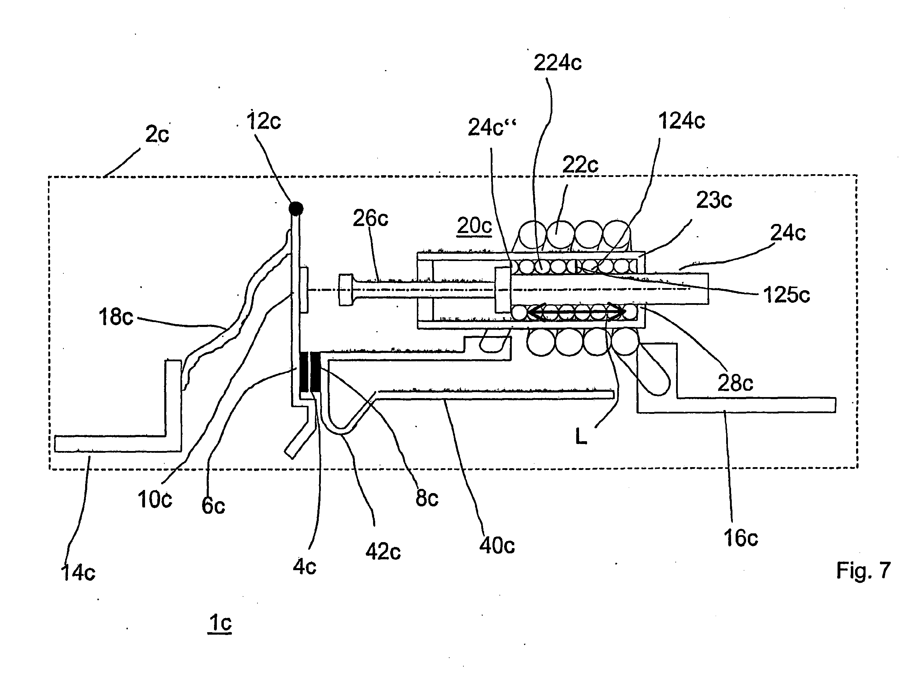

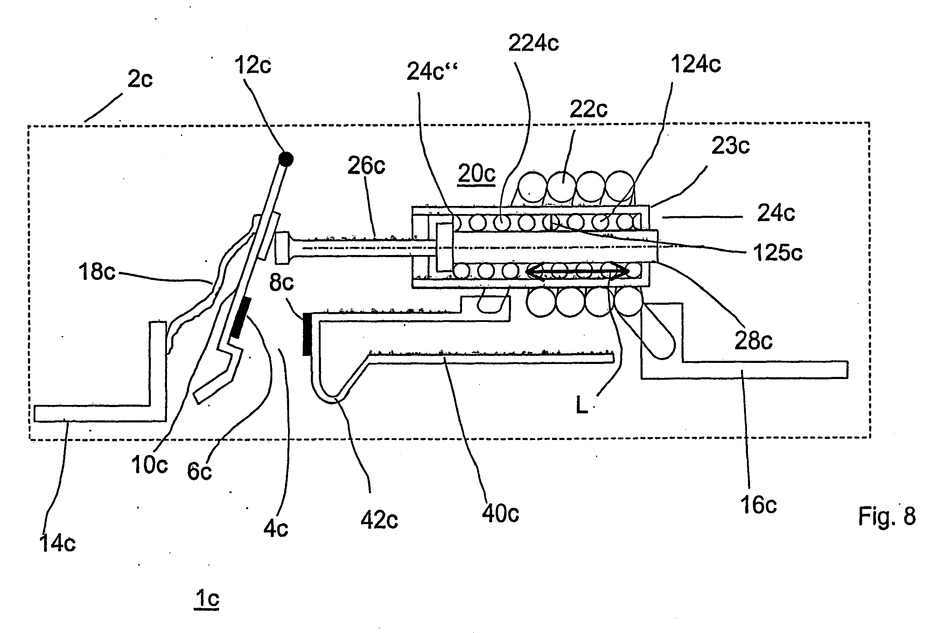

In Fig. 7 ist eine weitere Ausführungsform eines erfindungsgemäßen Schaltgerätes 1c in nicht ausgelöstem Zustand und in Fig. 8 das Schaltgerät 1 c in ausgelöstem Zustand gezeigt. Gleiche oder gleichwirkende Baugruppen und Teile sind mit denselben Bezugsziffern wie beim Schaltgerät 1 in den Fig. 1 und 2, ergänzt um den Buchstaben c, bezeichnet. Der wesentliche Unterschied zwischen dem Schaltgerät 1c gemäß Fig. 7 und 8 und dem Schaltgerät 1 gemäß Fig. 1 und 2 besteht darin, dass bei ersterem der Auslöseanker 24c spiralförmig ausgebildet und im Inneren der Auslösespule 24c in einer parallel zur Spulenachse ausgerichteten Führungshülse 23c geführt ist. Er ist aus einer ersten, magnetischen Teil-Auslöseanker-Spirale 124c, und einer zweiten, thermischen Teil-Auslöseanker-Spirale 224c gebildet. Beide Teil-Auslöseanker-Spiralen 124c und 224c sind hintereinander angeordnet und an der Verbindungsstelle 125c form-, kraft-, oder stoffschlüssig miteinander verbunden. Die erste, magnetische Teil-Auslöseanker-Spirale 124c besteht aus einer ferromagnetischen Formgedächtnislegierung mit einem magnetischen Formgedächtniseffekt auf Basis von Nickel, Mangan und Gallium. Die zweite, thermische Teil-Auslöseanker-Spirale 224c besteht hier beispielsweise aus einer im Prinzip bekannten thermischen Formgedächtnislegierung aus Nickel-Titan, oder aus einem Thermobimetall.

Die durch das Magnetfeld der Auslösespule 22c im Kurzschlussfall oder durch Temperaturerhöhung des Auslöseankers 24c aufgrund von Wärmestrahlung von der Auslösespule 22c induzierte Formänderung des spiralförmigen Auslöseankers 24c besteht hier im ersten Fall in einer Ausdehnung der ersten, magnetischen Teil-Auslöseanker-Spirale 124c, wodurch auch die zweite, thermische Teil-Auslöseanker-Spirale 224c mit verschoben wird, oder im zweiten Fall in einer Ausdehnung der zweiten, thermischen Teil-Auslöseanker-Spirale 224c und somit in jedem Fall in einer integralen Ausdehnung der den Auslöseanker bildenden Spirale 24c in Richtung der Spiralenlängsachse, angedeutet durch den Richtungspfeil L. An dem beweglichen Ende 24c" des spiralförmigen Auslöseankers 24c steht dieser in Wirkverbindung mit dem Stößel 26c, der im Auslösefall die Kontaktstelle 4c öffnet, siehe Fig. 8. Das Schaltwerk und dessen Wirkverbindungslinien mit dem Auslöseanker 24c und der Kontaktstelle 4c sind hier der Übersichtlichkeit halber nicht dargestellt.

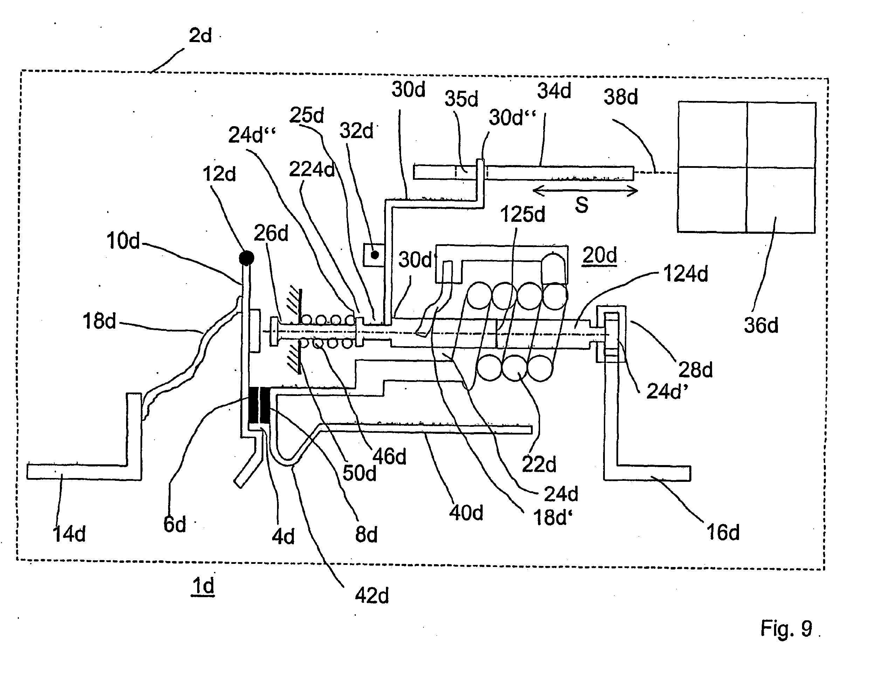

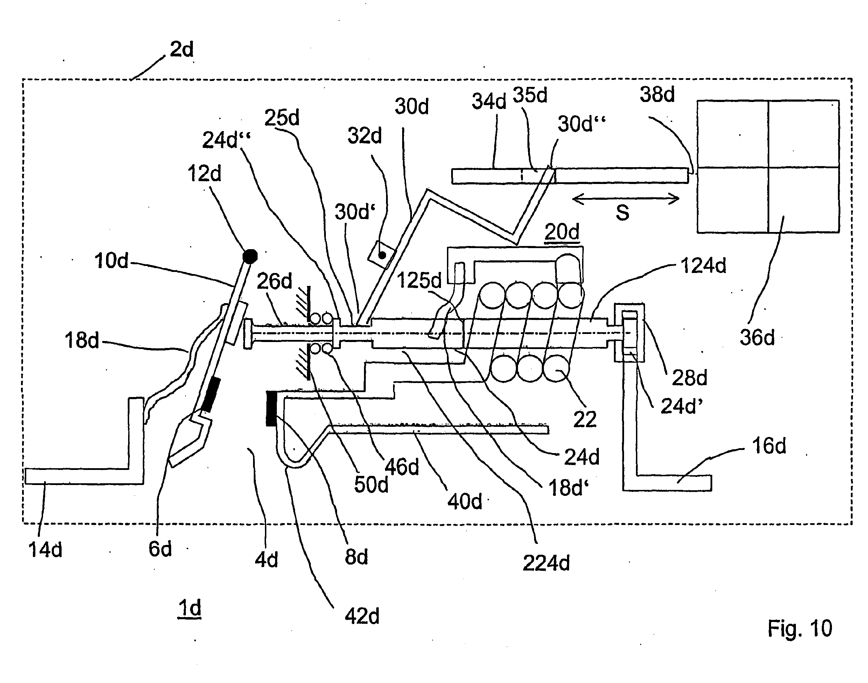

In Fig. 9 ist eine weitere Ausführungsform eines erfindungsgemäßen Schaltgerätes 1d in nicht ausgelöstem Zustand, und in Fig. 10 ist das Schaltgerät 1d in ausgelöstem Zustand gezeigt. Gleiche oder gleichwirkende Baugruppen und Teile sind mit denselben Bezugsziffern wie beim Schaltgerät 1 in den Fig. 1 und 2, ergänzt um den Buchstaben d, bezeichnet.

Die in Fig. 9 gezeigte Ausführungsform unterscheidet sich von derjenigen in Fig. 1 dadurch, dass bei ersterer die Erwärmung des Auslöseankers 24d direkt durch Stromfluss erfolgt und nicht, wie bei letzterer, indirekt über Wärmestrahlung von der Auslösespule 22d her. Der Strompfad in der Ausführungsform nach Fig. 9 stellt sich folgendermaßen dar: von der Eingangsklemme 14d fließt der Strom über die bewegliche Litze 18d, den Kontakthebel 10d. die Kontaktstelle 4d durch die Auslösespule 22d und weiter in Serie zu dieser über eine weitere bewegliche Litze 18d', die das Ende der Auslösespule 22d elektrisch mit dem zweiten, thermischen Teil-Auslöseanker 224d verbindet, durch diesen und den ersten, magnetischen Teil-Auslöseanker 124d hindurch und von dessen festem Ende 24d' weiter zu der Ausgangsklemme 16d. Im Falle eines Überstromes wird der erste, thermische Teil-Auslöseanker 224d also durch Stromwärme direkt erwärmt. Dadurch ist eine thermisch exaktere Auslegung des thermischen und magnetischen Auslösers 20d möglich.

Zur Unterstützung der Rückverformung des Auslöseankers 24d nach der Auslösung- im Kurzschlussstromfall nach Zusammenbrechen des Magnetfeldes der Auslösespule 22d oder im Überstromfall nach Abkühlung des Auslöseankers 24d auf eine Temperatur unterhalb der thermischen Transitionstemperatur infolge der Kontaktöffnung - ist in der Ausführungsform nach Fig. 9 und 10 eine Rückstellfeder 46d vorgesehen. Diese ist hier als Spiralfeder ausgebildet und umfasst den Stößel 26d. Sie könnte aber auch als Blattfeder oder auf sonstige geeignete Art und Weise ausgebildet sein. Die Rückstellfeder ist in nicht ausgelöstem Zustand (Fig. 9) entspannt. Sie stützt sich mit einem Ende an ein mit dem Gehäuse verbundenes Federlager 50d ab, und mit ihrem anderen Ende an dem beweglichen Ende 24d" des Auslöseankers 24d. Im Auslösefall (Fig. 10) wird sie durch den sich ausdehnenden Auslöseanker 24d zusammengedrückt.

Die in den Fig. 1 bis 10 dargestellten und beschriebenen Ausführungsbeispiele sind eine exemplarische, nicht abschließende Darstellung möglicher erfindungsgemäßer Schaltgeräte unter Verwendung eines thermischen und elektromagnetischen Auslösers mit einem Auslöseanker aus einem ersten, magnetischen Teil-Auslöseanker und einem zweiten, thermischen Teil-Auslöseanker.Es können auch aus allen anderen im Stand der Technik bekannten Schaltgerätevarianten mit thermischen und elektromagnetischen Auslösern durch die erfindungsgemäße Verwendung einer ferromagnetischen Formgedächtnislegierung in einem ersten, magnetischen Teil-Auslöseanker eines aus einem ersten, magnetischen Teil-Auslöseanker und einem zweiten, thermischen Teil-Auslöseanker gebildeten Auslöseanker erfindungsgemäße Schaltgeräte hergestellt werden.

### Bezugszeichenliste:

| | |
|---|---|
| 1, 1a, 1b, 1c, 1d | Schaltgerät |
| 2, 2a, 2b, 2c, 2d | Gehäuse |
| 4, 4a, 4b, 4c, 4d | Kontaktstelle |
| 6, 6a, 6b, 6c, 6d | bewegliches Kontaktstück |
| 8, 8a, 8b, 8c, 8d | festes Kontaktstück |
| 10, 10a, 10b, 10c, 10d, | Kontakthebel |
| 12, 12a, 12b, 12c, 12d | Kontakthebel-Lager |
| 14, 14a, 14b, 14c | Eingangsklemme |
| 16, 16a, 16b, 16c | Ausgangsklemme |
| 18, 18a, 18b, 18c, 18d, 18d' | Bewegliche Litze |
| 20, 20a, 20b, 20c, 20d | thermischer und magnetischer Auslöser |
| 22,22a, 22b, 22c, 22d | Auslösespule |
| 23c | Führungshülse |
| 24, 24a, 24b, 24c, 24d | Auslöseanker |
| 124, 124a, 124b, 124c,124d | Erster, magnetischer Teil-Auslöseanker |
| 125, 125a, 125b, 125c, 125d | Verbindungsstelle |
| 224, 224a,224b, 224c, 224d | zweiter thermischer Teil-Auslöseanker. |
| 24', 24b', 24d' | festes Ende des Auslöseankers |
| 24", 24b", 24c", 24d" | bewegliches Ende des Auslöseankers |
| 25, 25d | Einkerbung |
| 26, 26a, 26b, 26c, 26d | Stößel |
| 28, 28a, 28b, 28c, 28d | Auslöseanker-Lager |
| 30, 30d | Auslösehebel |
| 30', 30d' | erstes freies Ende des Auslösehebels |
| 30", 30d" | zweites freies Ende des Auslösehebels |
| 32, 32d | Auslösehebel-Lager |
| 33b | erster Schenkel des Schiebers 34b |
| 33b' | Zweiter Schenkel des Schiebers 34b |
| 34, 34b, 34d | Schieber |
| 35, 35b, 35d | Ausnehmung im Schieber |
| 36, 36d | Schaltwerk |
| 38, 38d | Wirklinie |
| 40, 40a, 40b, 40c, 40d | Joch |
| 42, 42a, 42b, 42c, 42d | Zwischenstück |
| 46d | Rückstellfeder |
| 50d | Federlager |
| S, L, | Richtungspfeil |

## Patentansprüche

1. Schaltgerät (1, 1a, 1 b, 1 c, 1 d) mit einem Gehäuse (2, 2a, 2b, 2c, 2d) und mit wenigstens einer ein festes Kontaktstück (8, 8a, 8b,8c, 8d) und ein bewegliches Kontaktstück (6, 6a, 6b, 6c, 6d) umfassenden Kontaktstelle (4, 4a, 4b, 4c, 4d), und mit einem thermischen und magnetischen Auslöser (20, 20a, 20b, 20c, 20d), der eine Auslösespule (22, 22a, 22b, 22c, 22d) und einen Auslöseanker (24, 24a, 24b, 24c, 24d) umfasst, wobei der Auslöseanker (24, 24a, 24b, 24c, 24d) wenigstens zwei in Wirkverbindung stehende Teil-Auslöseanker umfasst wobei der zweite Teil-Auslöseanker (224, 224a, 224b, 224c, 224d) aus einem Thermobimetall oder aus einem Material mit thermischem Formgedächtniseffekt oder aus einem Material mit kombiniertem thermischen und magnetischem Formgedächtniseffekt gebildet ist, wobei der Auslöseanker (24, 24a, 24b, 24c, 24d) sowohl unter Einfluss des Magnetfeldes der Auslösespule (22, 22a, 22b, 22c, 22d) im Kurzschlussstromfall, als auch unter Einfluss einer durch Überstrom hervorgerufenen Temperaturerhöhung verformt und **dadurch** die Öffnung der Kontaktstelle (4, 4a, 4b, 4c, 4d) bewirkt wird, **dadurch gekennzeichnet, dass** der erste Teil-Auslöseanker (124, 124a, 124b, 124c, 124d) aus einem ersten Material mit einem magnetischen Formgedächtniseffekt gebildet ist.

2. Schaltgerät nach Anspruch 1, **dadurch gekennzeichnet, dass** der erste Teil-Auslöseanker (124, 124a, 124b, 124c, 124d) aus einer ferromagnetischen Formgedächtnislegierung aus Nickel, Mangan und Gallium gebildet ist.

3. Schaltgerät nach Anspruch 1 oder 2, **dadurch gekennzeichnet, dass** der erste und zweite Teil-Auslöseanker (124, 124a, 124b, 124c, 124d; 224, 224a, 224b, 224c, 224d) aus unterschiedlich zusammengesetzten ferromagnetischen Formgedächtnislegierungen aus Nickel, Mangan und Gallium gebildet-sind.

4. Schaltgerät nach einem der Ansprüche 1 bis 3, **dadurch gekennzeichnet, dass** der erste und zweite Teil-Auslöseanker (124, 124a, 124b, 124c, 124d; 224, 224a, 224b, 224c, 224d) als längserstreckte Bauteile ausgebildet sind, wobei unter dem Einfluss des Magnetfeldes der Auslösespule (22, 22a, 22b, 22c, 22d) im Kurzschlussstromfall der erste Teil-Auslöseanker (124, 124a, 124b, 124c, 124d) und unter Einfluss einer durch Überstrom hervorgerufenen Temperaturerhöhung der zweite Teil-Auslöseanker (224, 224a, 224b, 224c, 224d) in Richtung ihrer Längsachse gedehnt werden.

5. Schaltgerät nach einem der Ansprüche 1 bis 3, **dadurch gekennzeichnet, dass** der erste und zweite Teil-Auslöseanker balkenförmig ausgebildet sind, wobei unter dem Einfluss des Magnetfeldes der Auslösespule im Kurzschlussstromfall der erste Teil-Auslöseanker und unter Einfluss einer durch Überstrom hervorgerufenen Temperaturerhöhung der zweite Teil-Auslöseanker verbogen werden.

6. Schaltgerät nach einem der Ansprüche 1 bis 3, **dadurch gekennzeichnet, dass** der erste und zweite Teil-Auslöseanker spiralförmig ausgebildet sind, wobei unter dem Einfluss des Magnetfeldes der Auslösespule im Kurzschlussstromfall der erste Teil-Auslöseanker und unter Einfluss einer durch Überstrom hervorgerufenen Temperaturerhöhung der zweite Teil-Auslöseanker in Richtung der Spiralenlängsachse gedehnt werden.

7. Schaltgerät nach einem der Ansprüche 1 bis 6, **dadurch gekennzeichnet, dass** der Auslöseanker von der Auslösespule umfasst ist.

8. Schaltgerät nach einem der Ansprüche 1 bis 6, **dadurch gekennzeichnet, dass** der Auslöseanker außerhalb der Spule in deren Nahbereich angebracht ist.

9. Schaltgerät nach einem der vorigen Ansprüche, **dadurch gekennzeichnet, dass** die Temperaturerhöhung des Auslöseankers im Überstromfall mittels indirekter Erwärmung durch die den Überstrom führende Auslösespule bewirkt wird.

10. Schaltgerät nach einem der Ansprüche 1 bis 8, **dadurch gekennzeichnet, dass** die Temperaturerhöhung des Auslöseankers im Überstromfall durch direkte Erwärmung aufgrund des den Auslöseanker durchfließenden Überstromes bewirkt wird.

11. Schaltgerät nach einem der Ansprüche 1 bis 10, **dadurch gekennzeichnet, dass** der Auslöseanker an einem ersten Ende in einem mit dem Gehäuse verbundenem Lager gehalten ist.

12. Schaltgerät nach einem der Ansprüche 1 bis 10, **dadurch gekennzeichnet, dass** der Auslöseanker an seinem zweiten Ende in Wirkverbindung mit einem Stößel steht.

13. Verwendung eines Materials mit einem magnetischen Formgedächtniseffekt in einem eine Auslösespule und einen Auslöseanker, der zwei in Wirkverbindung stehende Teil-Auslöseanker umfasst, umfassenden thermisch-elektromagnetischen Auslöser für ein Schaltgerät, **dadurch gekennzeichnet, dass** ein erster Teil-Auslöseanker des Auslösers aus dem Material mit dem magnetischen Formgedächtniseffekt gebildet ist, und ein zweiter Teil-Auslöseanker aus einem Thermobimetall oder aus einem Material mit thermischem Formgedächtniseffekt oder aus einem Material mit kombiniertem thermischen und magnetischem Formgedächtniseffekt gebildet ist, wobei sowohl unter Einfluss des Magnetfeldes der Auslösespule im Kurzschlussstromfall, als auch unter Einfluss einer durch Überstrom hervorgerufenen Temperaturerhöhung der Auslöseanker verformt und **dadurch** die Öffnung der Kontaktstelle bewirkt wird.

14. Verwendung eines Materials mit einem magnetischen Formgedächtniseffekt nach Anspruch 13, bestehend aus einer ferromagnetischen Formgedächtnislegierung aus Nickel, Mangan und Gallium.

15. Verwendung eines Materials mit einem magnetischen Formgedächtniseffekt nach Anspruch 14, **dadurch gekennzeichnet, dass** der erste und zweite Teil-Auslöseanker (124, 124a, 124b, 124c, 124d; 224, 224a, 224b, 224c, 224d) aus unterschiedlich zusammengesetzten ferromagnetischen Formgedächtnislegierungen aus Nickel, Mangan und -Gallium gebildet sind.

16. Verwendung eines Materials mit einem magnetischen Formgedächtniseffekt zur Kurzschluss- und Überstromstromauslösung in einem eine Auslösespule und einen thermischen und elektromagnetischen Auslöser umfassenden Schaltgerät, **dadurch gekennzeichnet, dass** ein erster Teil-Auslöseanker des zwei in Wirkverbindung stehende Teil-Auslöseanker umfassenden Auslöseankers aus dem Material mit dem magnetischen Formgedächtniseffekt gebildet ist, und ein zweiter Teil-Auslöseanker des zwei in Wirkverbindung stehende Teil-Auslöseanker umfassenden Auslöseankers aus einem Thermobimetall oder aus einem Material mit thermischem Formgedächtniseffekt oder aus einem Material mit kombiniertem thermischen und magnetischem Formgedächtniseffekt gebildet ist, wobei sowohl unter Einfluss des Magnetfeldes der Auslösespule im Kurzschlussstromfall, als auch unter Einfluss einer durch Überstrom hervorgerufenen Temperaturerhöhung der Auslöseanker verformt und **dadurch** die Öffnung der Kontaktstelle bewirkt wird.

17. Verwendung eines Materials mit einem magnetischen Formgedächtniseffekt zur Kurzschluss- und Überstromstromauslösung nach Anspruch 16, bestehend aus einer ferromagnetischen Formgedächtnislegierung aus Nickel, Mangan und Gallium.

18. Verwendung eines Materials mit einem magnetischen Formgedächtniseffekt zur Kurzschluss- und Überstromstromauslösung nach Anspruch 17, bestehend aus unterschiedlich zusammengesetzten ferromagnetischen Formgedächtnislegierungen aus Nickel, Mangan und Gallium zur Bildung des ersten und zweiten Teil-Auslöseankers (124, 124a, 124b, 124c, 124d; 224, 224a, 224b, 224c, 224d).

## Claims

1. Switching equipment (1, 1 a, 1b, 1 c, 1 d), comprising a housing (2, 2a, 2b, 2c, 2d) and at least one contact point (4, 4a, 4b, 4c, 4d) that has a fixed contact part (8, 8a, 8b, 8c, 8d) and a mobile contact part (6, 6a, 6b, 6c, 6d) and a thermal and magnetic trip device (20, 20a, 20b, 20c, 20d), comprising a trip coil (22, 22a, 22b, 22c, 22d) and a trip armature (24, 24a, 24b, 24c, 24d), with the trip armature (24, 24a, 24b, 24c, 24d) comprising at least two trip sub-armatures that are in operative connection, with the second trip sub-armature (224, 224a, 224b, 224c, 224d) being configured from a thermal bimetal, or a material with thermal shape memory properties, or a material with combined thermal and magnetic shape memory properties, with the trip armature (24, 24a, 24b, 24c, 24d) being deformed both by the influence of the magnetic field of the trip coil (22, 22a, 22b, 22c, 22d) in the event of a short circuit and by the influence of a temperature increase that is caused by an excess current, thus causing the contact point (4, 4a, 4b, 4c, 4d) to open, **characterized in that** the first trip sub-armature (124, 124a, 124b, 124c, 124d) is configured from a first material with magnetic shape memory properties.

2. Switching equipment according to claim 1, **characterized in that** the first trip sub-armature (124, 124a, 124b, 124c, 124d) is made of a ferromagnetic shape memory alloy made of nickel, manganese and gallium.

3. Switching equipment according to claim 1 or 2, **characterized in that** the first and second trip sub-armature (124, 124a, 124b, 124c, 124d; 224, 224a, 224b, 224c, 224d) are made of differently composed ferromagnetic shape memory alloys made of nickel, manganese and gallium.

4. Switching equipment according to one of the claims 1 to 3, **characterized in that** the first and second trip sub-armature (124, 124a, 124b, 124c, 124d; 224, 224a, 224b, 224c, 224d) are arranged as elongated components, with the first trip sub-armature (124, 124a, 124b, 124c, 124d) being elongated in the direction of its longitudinal axis under the influence of the magnetic field of the trip coil (22, 22a, 22b, 22c, 22d) in the event of a short circuit and the second trip sub-armature (224, 224a, 224b, 224c, 224d) being elongated in the direction of its longitudinal axis under the influence of an increase in temperature caused by excess current.

5. Switching equipment according to one of the claims 1 to 3, **characterized in that** the first and second trip sub-armature are arranged in the manner of a beam, with the first trip sub-armature being bent under the influence of the magnetic field of the trip coil in the case of a short circuit and the second trip sub-armature being bent under the influence of an increase in temperature caused by excess current.

6. Switching equipment according to one of the claims 1 to 3, **characterized in that** the first and second trip sub-armature are arranged in the manner of a spiral, with the first trip sub-armature being extended in the direction of the spiral axis under the influence of the magnetic field of the trip coil in the case of a short circuit and the second trip sub-armature being extended in the direction of the spiral axis under the influence of an increase in temperature caused by excess current.

7. Switching equipment according to one of the claims 1 to 6, **characterized in that** the trip armature is enclosed by the trip coil.

8. Switching equipment according to one of the claims 1 to 6, **characterized in that** the trip armature is attached outside of the coil in the direct vicinity of the same.

9. Switching equipment according to one of the preceding claims, **characterized in that** the temperature increase of the trip armature in the case of excess current is caused by means of indirect heating by the trip coil conducting the excess current.

10. Switching equipment according to one of the claims 1 to 8, **characterized in that** the temperature increase of the trip armature in the case of excess current is caused by direct heating as a result of the excess current flowing through the trip armature.

11. Switching equipment according to one of the claims 1 to 10, **characterized in that** the trip armature is held at a first end in a bearing connected with the housing.

12. Switching equipment according to one of the claims 1 to 10, **characterized in that** the trip armature is in operative connection with a tappet at its second end.

13. Use of a material with magnetic shape memory properties in a thermoelectromagnetic trip device for a switching equipment which comprises a trip coil and a trip armature having two trip sub-armatures in operative connection with each other, **characterized in that** a first trip sub-armature of the trip device is made of the material with the magnetic shape memory properties, and a second trip sub-armature is made from a thermal bimetal, or a material with thermal shape memory properties, or a material with combined thermal and magnetic shape memory properties, with the trip armature being deformed both by the influence of the magnetic field of the trip coil in the event of a short circuit and by the influence of a temperature increase that is caused by an excess current, thus causing the contact point to open.

14. Use of a material with magnetic shape memory properties according to claim 13, consisting of a ferromagnetic shape memory alloy made of nickel, manganese and gallium.

15. Use of a material with magnetic shape memory properties according to claim 14, **characterized in that** the first and second trip sub-armature (124, 124a, 124b, 124c, 124d; 224, 224a, 224b, 224c, 224d) are made of differently composed ferromagnetic shape memory alloys made of nickel, manganese and gallium.

16. Use of a material with magnetic shape memory properties for short-circuit and excess-current tripping in switching equipment comprising a trip coil and a thermal and electromagnetic trip device, **characterized in that** a first trip sub-armature of the trip armature comprising two trip sub-armatures which are in operative connection with each other is formed from the material with the magnetic shape memory properties, and a second trip sub-armature of the trip armature comprising two trip sub-armatures which are in operative connection with each other is formed from a thermal bimetal, or a material with thermal shape memory properties, or a material with combined thermal and magnetic shape memory properties, with the trip armature being deformed both by the influence of the magnetic field of the trip coil in the event of a short circuit and by the influence of a temperature increase that is caused by an excess current, thus causing the contact point to open.

17. Use of a material with magnetic shape memory properties for short-circuit or excess-current tripping according to claim 16, consisting of a ferromagnetic shape memory alloy made of nickel, manganese and gallium.

18. Use of a material with magnetic shape memory properties for short-circuit or excess-current tripping according to claim 17, consisting of differently composed ferromagnetic shape memory alloys made of nickel, manganese and gallium for forming the first and second trip sub-armature (124, 124a, 124b, 124c, 124d; 224, 224a, 224b, 224c, 224d).

## Revendications

1. Appareil de commutation (1, 1a, 1b, 1c, 1d) avec un boîtier (2, 2a, 2b, 2c, 2d) et avec au moins un point de contact (4, 4a, 4b, 4c, 4d) comprenant un élément de contact fixe (8, 8a, 8b,8c, 8d) et un élément de contact mobile (6, 6a, 6b, 6c, 6d), et avec un déclencheur thermique et magnétique (20, 20a, 20b, 20c, 20d) qui comprend une bobine de déclenchement (22, 22a, 22b, 22c, 22d) et un induit de déclenchement (24, 24a, 24b, 24c, 24d), lequel induit de déclenchement (24, 24a, 24b, 24c, 24d) comprend au moins deux induits de déclenchement partiels en liaison active, le deuxième induit de déclenchement partiel (224, 224a, 224b, 224c, 224d) étant formé d'un bilame thermique ou d'un matériau à effet de mémoire de forme thermique ou d'un matériau à effet de mémoire de forme thermique et mécanique combinée, l'induit de déclenchement (24, 24a, 24b, 24c, 24d) étant déformé sous l'effet à la fois du champ magnétique de la bobine de déclenchement (22, 22a, 22b, 22c, 22d) en cas de courant de court-circuit et d'une élévation de la température provoquée par une surintensité pour provoquer l'ouverture du point de contact (4, 4a, 4b, 4c, 4d), **caractérisé en ce que** le premier induit de déclenchement partiel (124, 124a, 124b, 124c, 124d) est fait d'un premier matériau à effet de mémoire de forme magnétique.

2. Appareil de commutation selon la revendication 1, **caractérisé en ce que** le premier induit de déclenchement partiel (124, 124a, 124b, 124c, 124d) est fait d'un alliage à mémoire de forme ferromagnétique à base de nickel, de manganèse et de gallium.

3. Appareil de commutation selon la revendication 1 ou 2, **caractérisé en ce que** le premier induit de déclenchement partiel et le deuxième (124, 124a, 124b, 124c, 124d ; 224, 224a, 224b, 224c, 224d) sont faits d'alliages à mémoire de forme ferromagnétiques à base de nickel, de manganèse et de gallium ayant des compositions différentes.

4. Appareil de commutation selon l'une des revendications 1 à 3, **caractérisé en ce que** le premier induit de déclenchement partiel et le deuxième (124, 124a, 124b, 124c, 124d ; 224, 224a, 224b, 224c, 224d) sont conçus comme des éléments allongés, le champ magnétique de la bobine de déclenchement (22, 22a, 22b, 22c, 22d) en en cas de courant de court-circuit provoquant l'allongement du premier induit de déclenchement partiel (124, 124a, 124b, 124c, 124d) et une élévation de la température provoquée par une surintensité provoquant l'allongement du deuxième induit de déclenchement partiel (224, 224a, 224b, 224c, 224d) dans le sens de leur axe longitudinal.

5. Appareil de commutation selon l'une des revendications 1 à 3, **caractérisé en ce que** le premier induit de déclenchement partiel et le deuxième sont en forme de barre, l'influence du champ magnétique de la bobine de déclenchement en cas de courant de court-circuit provoquant un cintrage du premier induit de déclenchement partiel et une élévation de la température provoquée par une surintensité un cintrage du deuxième induit de déclenchement partiel.

6. Appareil de commutation selon l'une des revendications 1 à 3, **caractérisé en ce que** les premier et deuxième induits de déclenchement partiels sont en forme de spirale, le champ magnétique de la bobine de déclenchement en cas de courant de court-circuit provoquant l'allongement du premier induit de déclenchement partiel et l'élévation de la température provoquée par une surintensité l'allongement du deuxième induit de déclenchement partiel dans le sens de l'axe longitudinal de la spirale.

7. Appareil de commutation selon l'une des revendications 1 à 6, **caractérisé en ce que** l'induit de déclenchement est entouré par la bobine de déclenchement.

8. Appareil de commutation selon l'une des revendications 1 à 6. **caractérisé en ce que** l'induit de déclenchement est disposé à l'extérieur et à proximité de la bobine.

9. Appareil de commutation selon l'une des revendications précédentes, **caractérisé en ce que** l'élévation de la température de l'induit de déclenchement en cas de surintensité est obtenu par chauffage indirect par la bobine de déclenchement acheminant la surintensité.

10. Appareil de commutation selon l'une des revendications 1 à 8, **caractérisé en ce que** l'élévation de la température de l'induit de déclenchement en cas de surintensité est obtenue par chauffage direct sous l'effet de la surintensité parcourant l'induit de déclenchement.

11. Appareil de commutation selon l'une des revendications 1 à 10, **caractérisé en ce que** l'induit de déclenchement est retenu à une première extrémité dans un palier relié au boîtier.

12. Appareil de commutation selon l'une des revendications 1 à 10, **caractérisé en ce que** l'induit de déclenchement est en liaison active avec un poussoir à une deuxième extrémité.

13. Utilisation d'un matériau à effet de mémoire de forme magnétique dans un disjoncteur thermique et électromagnétique pour un appareil de commutation comprenant une bobine de déclenchement et un induit de déclenchement avec deux induits de déclenchement partiels en liaison active, **caractérisée en ce qu'**un premier induit de déclenchement partiel du disjoncteur est fait d'un matériau à effet de mémoire de forme magnétique et un deuxième induit de déclenchement partiel d'un bilame thermique ou d'un matériau à effet de mémoire de forme thermique ou d'un matériau à effet de mémoire de forme thermique et magnétique combiné, dans lequel l'induit de déclenchement est déformé et le point le point de contact ouvert aussi bien sous l'action du champ magnétique de la bobine de déclenchement en cas de courant de court-circuit que de l'élévation de la température provoquée par une surintensité.

14. Utilisation d'un matériau à effet de mémoire de forme magnétique selon la revendication 13, composé d'un alliage à mémoire de forme ferromagnétique à base de nickel, de manganèse et de gallium.

15. Utilisation d'un matériau à effet de mémoire de forme magnétique selon la revendication 14, **caractérisée en ce que** le premier induit de déclenchement partiel et le deuxième (124, 124a, 124b, 124c, 124d ; 224, 224a, 224b, 224c, 224d) sont faits d'alliages à mémoire de forme ferromagnétiques à base de nickel, de manganèse et de gallium de compositions différentes.

16. Utilisation d'un matériau à effet de mémoire de forme magnétique pour le déclenchement en cas de court-circuit et de surintensité dans un appareil de commutation comprenant une bobine de déclenchement et un disjoncteur thermique et électromagnétique, **caractérisée en ce qu'**un premier induit de déclenchement partiel de l'induit de déclenchement comprenant deux induits de déclenchement partiels en liaison active est composé du matériau à effet de mémoire de forme magnétique et un deuxième induit de déclenchement partiel de l'induit de déclenchement comprenant deux induits de déclenchement partiels en liaison active est fait d'un bilame thermique ou d'un matériau à effet de mémoire de forme thermique ou d'un matériau à effet de mémoire de forme thermique et magnétique combiné, l'induit de déclenchement étant déformé et le point de contact ainsi ouvert aussi bien sous l'action du champ magnétique de la bobine de déclenchement en cas de courant de court-circuit que de l'élévation de la température provoquée par une surintensité.

17. Utilisation d'un matériau à effet de mémoire de forme magnétique pour le déclenchement en cas de court-circuit et de surintensité selon la revendication 16, composé d'un alliage à mémoire de forme ferromagnétique à base de nickel, de manganèse et de gallium.

18. Utilisation d'un matériau à effet de mémoire de forme magnétique pour le déclenchement en cas de court-circuit et de surintensité selon la revendication 17, composé d'alliages à mémoire de forme ferromagnétiques à base de nickel, de manganèse et de gallium ayant des compositions différentes pour former le premier induit de déclenchement partiel et le deuxième (124, 124a, 124b, 124c, 124d ; 224, 224a, 224b, 224c, 224d).
